# EUROPÄISCHE PATENTANMELDUNG

(11) **EP 2 184 844 A1**
(43) Veröffentlichungstag der Anmeldung: **12.05.2010**
(21) Anmeldenummer: 09012237.5
(22) Anmeldetag: 26.09.2009
(51) Int. Cl.: H02M 7/487, H02M 7/483

(54) **Elektrischer Wechselrichter**

(30) Priorität: 08.11.2008 DE 102008056536
(71) Anmelder: Converteam Technology Ltd, Rugby Warwickshire CV21 1BU (GB)
(72) Erfinder: Janning, Jörg, Dr., 12049 Berlin (DE)
(74) Vertreter: Schäfer, Wolfgang

(57) **Zusammenfassung**

Es wird ein elektrischer Wechselrichter (10) beschrieben, der eine Reihenschaltung aus vier Schaltern (16, 17, 18, 19), insbesondere aus vier IGBTs (IGBT = insulated gate bipolar transistor) aufweist. An die Reihenschaltung ist eine Gleichspannung (UG) angelegt. Die Reihenschaltung ist nacheinander aus einem "äußeren" Schalter (16), zwei "inneren" Schaltern (17, 18) und einem weiteren "äußeren" Schalter (19) aufgebaut, wobei zwischen den beiden "inneren" Schaltern (17, 18) ein Anschlusspunkt (12) vorhanden ist. Die vier Schalter (16, 17, 18, 19) sind derart ansteuerbar, dass an dem Anschlusspunkt (12) eine Wechselspannung (UW) anliegt. Die Gate-Emitter-Spannung (Uge16, Uge19) der "äußeren" Schalter (16, 19) ist kleiner als die Gate-Emitter-Spannung (Uge17, Uge18) der jeweils benachbarten "inneren" Schalter (17, 18).

## Beschreibung

Die Erfindung betrifft einen elektrischen Wechselrichter nach dem Oberbegriff des Anspruchs 1 sowie ein Verfahren zum Betreiben eines elektrischen Wechselrichters nach dem Oberbegriff des Anspruchs 8.

Aus der DE 10 2005 054 291 A1 ist ein elektrischer Wechselrichter bekannt, der eine Reihenschaltung aus vier Schaltern, insbesondere aus vier IGBTs (IGBT = insulated gate bipolar transistor) aufweist. An die Reihenschaltung ist eine Gleichspannung angelegt. Die Reihenschaltung ist nacheinander aus einem "äußeren" Schalter, zwei "inneren" Schaltern und einem weiteren "äußeren" Schalter aufgebaut, wobei zwischen den beiden "inneren" Schaltern ein Anschlusspunkt vorhanden ist. Die vier Schalter sind derart ansteuerbar, dass an dem Anschlusspunkt eine Wechselspannung anliegt.

Sind beispielsweise ein "äußerer" und ein benachbarter "innerer" Schalter leitend geschaltet, und stellt der weitere "innere" Schalter aufgrund eines Defekts einen Kurzschluss dar, so fließt ein Kurzschlussstrom über diese drei Schalter und eine Sicherung. Die Sicherung ist derart dimensioniert, dass der Kurzschlussstrom zu einer Unterbrechung der Sicherung und damit des Stromflusses führt.

Aufgabe der Erfindung ist es, einen elektrischen Wechselrichter sowie ein Verfahren zu dessen Betrieb zu schaffen, bei denen der beschriebene Fehlerfall mit einem geringeren Aufwand beherrschbar ist.

Die Erfindung löst diese Aufgabe durch einen elektrischen Wechselrichter nach dem Anspruch 1 und ein Verfahren nach dem Anspruch 8.

Erfindungsgemäß ist die Gate-Emitter-Spannung der "äußeren" Schalter kleiner als die Gate-Emitter-Spannung der jeweils benachbarten "inneren" Schalter. Dies führt dazu, dass bei einem fehlerbedingten Kurzschluss eines "inneren" Schalters der leitend geschaltete "äußere" Schalter vor dem benachbarten leitend geschalteten "inneren" Schalter entsättigt und abgeschaltet wird. Damit wird erreicht, dass immer zuerst der "äußere" Schalter und erst danach der benachbarte "innere" Schalter abgeschaltet wird. Eine Schädigung oder gar Zerstörung eines oder beider Schalter wird damit vermieden, ohne dass hierfür ein zusätzlicher Aufwand beispielsweise in Form einer Sicherung erforderlich ist.

Die Erfindung stellt damit einen elektrischen Wechselrichter zur Verfügung, der ohne einen zusätzlichen Aufwand in der Lage ist, leitend geschaltete Schalter auch dann abzuschalten, wenn ein weiterer Schalter defekt ist und einen Kurzschluss bildet.

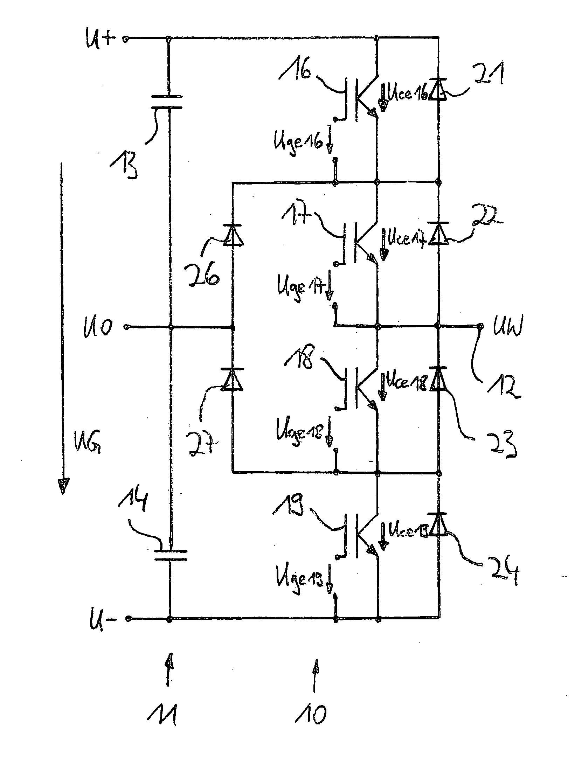

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Schaltbild eines Ausführungsbeispiels eines erfindungsgemäßen Wechselrichters.

In der Figur ist eine Phase eines elektrischen Wechselrichters 10 gezeigt, der eingangsseitig von einem Zwischenkreis 11 gespeist wird, und der ausgangsseitig eine Wechselspannung UW an einem Anschlusspunkt 12 zur Verfügung stellt. Der Zwischenkreis 11 weist zwei in Serie geschaltete Kondensatoren 13, 14 auf, an denen eine Gleichspannung UG anliegt. An den drei Anschlusspunkten der Kondensatoren 13, 14 sind die Potentiale U+, U-, U0 vorhanden. Vorzugsweise sind die Kondensatoren 13, 14 gleich groß, so dass die Potentiale U+, U- vorzeichenmäßig einander entgegengesetzt, aber betragsmäßig gleich groß sind und es sich bei dem Potential U0 um das Nullpotential handelt.

Bei dem Wechselrichter 10 handelt es sich um einen sogenannten 3-Level-Wechselrichter oder auch sogenannten NPC-Wechselrichter (NPC = neutral point clamp). Dies bedeutet, dass der Wechselrichter 10 zwischen den drei Potentialen U+, U-, U0 hin- und herschalten und jeweils eines dieser drei Potentiale an dem Anschlusspunkt 12 zur Verfügung stellen kann. Durch eine entsprechende Abfolge der drei Potentiale U+, U-, U0 entsteht dann die Wechselspannung UW.

Die in der Figur dargestellte Phase des Wechselrichters 10 weist eine zwischen die Potentiale U+, U- geschaltete und damit an der Gleichspannung UG anliegende Serienschaltung von vier Schaltern 16, 17, 18, 19 auf. Bei den Schaltern 16, 17, 18, 19 handelt es sich um sogenannte IGBTs (IGBT = insulated gate bipolar transistor), deren Durchlassrichtungen ausgehend von dem Potential U+ in Richtung zu dem Potential U- geschaltet sind. Zu jedem der IGBTs ist die zugehörige Gate-Emitter-Spannung Uge16, Uge17, Uge18, Uge19 angegeben.

Zu jedem der Schalter 16, 17, 18, 19 ist eine Diode 21, 22, 23, 24 parallel geschaltet, so dass eine Serienschaltung der vier Dioden 21, 22, 23, 24 entsteht. Die Durchlassrichtungen der Dioden 21, 22, 23, 24 sind ausgehend von dem Potential U- in Richtung zu dem Potential U+ geschaltet, so dass die Dioden 21, 22, 23, 24 jeweils als Freilaufdioden für die Schalter 16, 17, 18, 19 wirken.

Der Verbindungspunkt des ersten und des zweiten Schalters 16, 17 und der Verbindungspunkt des dritten und des vierten Schalters 18, 19 sind über eine Serienschaltung zweier Dioden 26, 27 miteinander verbunden. Die Durchlassrichtungen dieser Dioden 26, 27 ist dabei entgegengesetzt zu den Durchlassrichtungen der Schalter 16, 17, 18, 19 geschaltet.

Der Verbindungspunkt der beiden Dioden 26, 27 liegt an dem Potential U0 an. Dieser Verbindungspunkt entspricht dem "neutral point" des NPC-Wechselrichters.

Der Verbindungspunkt des zweiten und des dritten Schalters 17, 18 und damit auch der Verbindungspunkt der beiden zugehörigen Dioden 22, 23 ist mit dem Anschlusspunkt 12 verbunden.

Im fehlerfreien Betrieb des Wechselrichters 10 werden von einer Steuerung immer zwei der vier Schalter 16, 17, 18, 19 leitend geschaltet. Zur Durchschaltung des Potentials U+ an den Anschlusspunkt 12 werden die Schalter 16, 17 leitend geschaltet, zur Durchschaltung des Potentials U0 an den Anschlusspunkt 12 werden die Schalter 17, 18 leitend geschaltet, und zur Durchschaltung des Potentials U- an den Anschlusspunkt 12 werden die Schalter 18, 19 leitend geschaltet. Insgesamt werden die vier Schalter 16, 17, 18, 19 derart angesteuert, dass an dem Anschlusspunkt 12 durch eine entsprechende Abfolge der Potentiale U+, U-, U0 letztlich die Wechselspannung UW entsteht.

Die Übergänge in dieser Abfolge von Durchschaltungen der Potentiale U+, U-, U0 werden von der Steuerung derart vorgenommen, dass maximal nur zwei Schalter gleichzeitig leitend geschaltet sind. Dies wird dadurch sichergestellt, dass zwischen den Umschaltungen der Schalter eine Verriegelungszeitdauer vorgesehen ist.

Bei einem ersten Fehlerfall wird nachfolgend angenommen, dass ein Defekt des Schalters 18 vorliegt, der dazu führt, dass dieser defekte Schalter 18 einen Kurzschluss darstellt. In diesem Fall entsteht bei einer an sich vorgesehenen Durchschaltung des Potentials U+ eine Serienschaltung der beiden leitend geschalteten intakten Schalter 16, 17 und des kurzgeschlossenen defekten Schalters 18. Damit entsteht ein Kurzschlussstrom von dem Potential U+ über die drei Schalter 16, 17, 18 und die Diode 27 zu dem Potential U0.

Aufgrund des Kurzschlusses steigt der über die Schalter 16, 17, 18 fließende Strom schnell und stark an. Dies führt zu einer Entsättigung der beiden intakten Schalter 16, 17. Bei dieser Entsättigung steigt an mindestens einem der beiden intakten Schalter 16, 17 die anliegende Kollektor-Emitter-Spannung Uce16, Uce17 schnell und stark an.

Dieses Ansteigen der Kollektor-Emitter-Spannung Uce16, Uce17 kann von einer übergeordneten Einrichtung, beispielsweise von der bereits erwähnten Steuerung dazu herangezogen werden, den vorhandenen Kurzschluss zu erkennen und die beiden intakten Schalter 16, 17 abzuschalten. Beispielsweise könnte die Abschaltung des Schalters 16 oder des Schalters 17 genau dann erfolgen, wenn die zugehörigen Kollektor-Emitter-Spannungen Uce16, Uce17 einen vorgegebenen Grenzwert überschreiten.

Aufgrund von Bauteilstreuungen, also aufgrund von Streuungen der Eigenschaften von Schaltern gleichen Typs, oder aufgrund des vorhergehenden Betriebszustands der Schalter 16, 17 ist es allerdings eher unwahrscheinlich, dass die beiden Schalter 16, 17 in dem vorgenannten Beispiel gleichartig entsättigt werden. Statt dessen ist es wahrscheinlicher, dass einer der beiden Schalter vollständig entsättigt wird, während der andere der beiden Schalter gar nicht entsättigt wird. Das Abschalten eines nicht-entsättigten Schalters kann aber zu Schädigungen oder gar zur Zerstörung dieses Schalters führen.

Für die Abschaltung der beiden Schalter 16, 17 ist es wesentlich, dass immer zuerst der direkt an das Potential U+ angeschlossene Schalter 16 und erst danach der dazu nachgeordnete und direkt an den Anschlusspunkt 12 angeschlossene Schalter 17 abgeschaltet wird. Eine umgekehrte Abschalt-Reihenfolge kann zu Schädigungen oder gar zur Zerstörung des Schalters 17 führen, da der über den Schalter 17 fließende Strom auf keine anderen Bauteile kommutieren und damit zu einer Überspannung führen kann.

Aufgrund der erläuterten Bauteilestreuungen der beiden Schalter 16, 17 ist es möglich, dass der nachgeordnete Schalter 17 vollständig entsättigt wird und damit den vorgegebenen Grenzwert vor dem direkt an das Potential U+ angeschlossenen Schalter 16 erreicht. In diesem Fall würde der nachgeordnete Schalter 17 zuerst und damit vor dem direkt an das Potential U+ angeschlossenen Schalter 16 abgeschaltet werden. Wie erläutert wurde, könnte dies zu Schädigungen oder zur Zerstörung des Schalters 17 führen.

Es ist nun ganz allgemein so, dass die Entsättigung eines IGBT unter anderem abhängig ist von der Größe der Gate-Emitter-Spannung im eingeschalteten Zustand des IGBT. Insbesondere ist es so, dass mit der Wahl der Gate-Emitter-Spannung das Ansteigen der Kollektor-Emitter-Spannung und damit auch deren Erreichen des vorgegebenen Grenzwerts beeinflusst werden kann.

Bei dem in der Figur dargestellten Wechselrichter 10 wird nun die Gate-Emitter-Spannung Uge16 des direkt an das Potential U+ angeschlossenen Schalters 16 kleiner gewählt als die Gate-Emitter-Spannung Uge17 des dazu nachgeordneten Schalters 17. Beispielsweise wird die Gate-Emitter-Spannung Uge16 zu etwa 15 Volt und die Gate-Emitter-Spannung Uge17 zu etwa 17 Volt gewählt. Diese unterschiedlichen Gate-Emitter-Spannungen können im laufenden Betrieb des Wechselrichters 10 beispielsweise per Software vorgegeben und mit Hilfe von DC/DC-Wandlern erzeugt werden.

Aufgrund der kleineren Gate-Emitter-Spannung Uge16 des direkt an das Potential U+ angeschlossenen Schalters 16 wird erreicht, dass dieser Schalter 16 zuerst entsättigt wird und damit dessen Kollektor-Emitter-Spannung Uce16 zuerst den vorgegebenen Grenzwert erreicht. Umgekehrt führt die größere Gate-Emitter-Spannung Uge17 des nachgeordneten Schalters 17 dazu, dass dieser Schalter 17 nur teilweise oder gar nicht entsättigt wird und damit dessen Kollektor-Emitter-Spannung Uce17 den vorgegebenen Grenzwert nicht erreicht.

Insgesamt ergibt sich daraus, dass zuerst der direkt an dem Potential U+ angeschlossene und entsättigte Schalter 16 abgeschaltet wird. Erst danach wird, sofern erwünscht, der nachgeordnete Schalter 17 abgeschaltet. Die erwünschte Abschalt-Reihenfolge wird damit eingehalten und Schädigungen der Schalter 16, 17 werden vermieden.

Bei einem zweiten Fehlerfall wird nachfolgend angenommen, dass ein Defekt des Schalters 17 vorliegt, der dazu führt, dass dieser defekte Schalter 17 einen Kurzschluss darstellt. In diesem Fall entsteht bei einer an sich vorgesehenen Durchschaltung des Potentials U- eine Serienschaltung der beiden leitend geschalteten intakten Schalter 18, 19 und des kurzgeschlossenen defekten Schalters 17. Damit entsteht ein Kurzschlussstrom von dem Potential U0 über die Diode 26 und die drei Schalter 17, 18, 19 zu dem Potential U-.

In entsprechender Weise wie bei dem bereits erläuterten ersten Fehlerfall ist es für den vorliegenden zweiten Fehlerfall für die Abschaltung der beiden Schalter 18, 19 wesentlich, dass immer zuerst der direkt an das Potential U- angeschlossene Schalter 19 und erst danach der dazu vorgeordnete und direkt an den Anschlusspunkt 12 angeschlossene Schalter 18 abgeschaltet wird. Eine umgekehrte Abschalt-Reihenfolge kann zu Schädigungen oder gar zur Zerstörung des Schalters 18 führen.

Bei dem in der Figur dargestellten Wechselrichter 10 wird nun die Gate-Emitter-Spannung Uge19 des direkt an das Potential U- angeschlossenen Schalters 19 kleiner gewählt als die Gate-Emitter-Spannung Uge18 des dazu vorgeordneten Schalters 18. Beispielsweise wird die Gate-Emitter-Spannung Uge19 zu etwa 15 Volt und die Gate-Emitter-Spannung Uge18 zu etwa 17 Volt gewählt. Diese unterschiedlichen Gate-Emitter-Spannungen können im laufenden Betrieb des Wechselrichters 10 beispielsweise per Software vorgegeben und mit Hilfe von DC/DC-Wandlern dynamisch erzeugt und gegebenenfalls auch verändert werden.

Aufgrund der kleineren Gate-Emitter-Spannung Uge19 des direkt an das Potential U- angeschlossenen Schalters 19 wird erreicht, dass dieser Schalter 19 zuerst entsättigt wird und damit dessen Kollektor-Emitter-Spannung Uce19 zuerst den vorgegebenen Grenzwert erreicht. Umgekehrt führt die größere Gate-Emitter-Spannung Uge18 des vorgeordneten Schalters 18 dazu, dass dieser Schalter 18 nur teilweise oder gar nicht entsättigt wird und damit dessen Kollektor-Emitter-Spannung Uce18 den vorgegebenen Grenzwert nicht erreicht.

Insgesamt ergibt sich daraus, dass zuerst der direkt an dem Potential U- angeschlossene und entsättigte Schalter 19 abgeschaltet wird. Erst danach wird, sofern erwünscht, der nachgeordnete Schalter 18 abgeschaltet. Die erwünschte Abschalt-Reihenfolge wird damit eingehalten und Schädigungen der Schalter 18, 19 werden vermieden.

Im Zusammenhang mit den beiden vorstehend erläuterten Fehlerfällen werden also immer zuerst die beiden "äußeren" Schalter 16, 19, also die direkt an die Potentiale U+, U-angeschlossenen Schalter 16, 19, entsättigt und erst danach werden die beiden "inneren" Schalter 17, 18, also die dazu nach/vorgeordneten und damit direkt an den Anschlusspunkt 12 angeschlossenen Schalter 17, 18, gegebenenfalls teilweise entsättigt. Dies wird dadurch erreicht, dass der jeweils "äußere" Schalter 16, 19 mit einer kleineren Gate-Emitter-Spannung Uge16, Uge19 angesteuert wird als der jeweils benachbarte "innere" Schalter 17, 18. Dies führt dazu, dass immer zuerst der jeweils "äußere" Schalter 16, 19 abgeschaltet wird und erst danach, sofern erwünscht, der jeweils benachbarte "innere" Schalter 17, 18 abgeschaltet wird. Die erwünschte Abschalt-Reihenfolge wird in diesen beiden Fehlerfällen also immer eingehalten.

Bei einem dritten Fehlerfall wird nachfolgend angenommen, dass ein Defekt der beiden Schalter 18, 19 vorliegt, der dazu führt, dass diese defekten Schalter 18, 19 jeweils einen Kurzschluss darstellen. In diesem Fall entsteht bei einer an sich vorgesehenen Durchschaltung des Potentials U+ eine Serienschaltung der beiden leitend geschalteten intakten Schalter 16, 17 und der beiden kurzgeschlossenen defekten Schalter 18, 19. Damit entsteht ein Kurzschlussstrom von dem Potential U+ über die vier Schalter 16, 17, 18, 19 zu dem Potential U-.

In entsprechender Weise wird bei einem vierten Fehlerfall angenommen, dass ein Defekt der beiden Schalter 16, 17 vorliegt, der dazu führt, dass diese defekten Schalter 16, 17 jeweils einen Kurzschluss darstellen. In diesem Fall entsteht bei einer an sich vorgesehenen Durchschaltung des Potentials U- eine Serienschaltung der beiden leitend geschalteten intakten Schalter 18, 19 und der beiden kurzgeschlossenen defekten Schalter 16, 17. Damit entsteht ein Kurzschlussstrom von dem Potential U+ über die vier Schalter 16, 17, 18, 19 zu dem Potential U-.

In diesem dritten und vierten Fehlerfall werden, in vergleichbarer Weise wie bei dem ersten und zweiten Fehlerfall, immer zuerst die beiden "äußeren" Schalter 16, 19 entsättigt und erst danach werden die beiden "inneren" Schalter 17, 18 gegebenenfalls auch entsättigt. Dies wird dadurch erreicht, dass der jeweils "äußere" Schalter 16, 19 mit einer kleineren Gate-Emitter-Spannung Uge16, Uge19 angesteuert wird als der jeweils benachbarte "innere" Schalter 17, 18. Dies führt dazu, dass immer zuerst der jeweils "äußere" Schalter 16, 19 abgeschaltet wird und erst danach, sofern erwünscht, der jeweils benachbarte "innere" Schalter 17, 18 abgeschaltet wird. Die erwünschte Abschalt-Reihenfolge wird in dem dritten und dem vierten Fehlerfall somit eingehalten und Schäden werden vermieden.

## Patentansprüche

1. Elektrischer Wechselrichter (10) mit einer Reihenschaltung aus vier Schaltern (16, 17, 18, 19), insbesondere aus vier IGBTs (IGBT = insulated gate bipolar transistor), wobei an die Reihenschaltung eine Gleichspannung (UG) angelegt ist, wobei die Reihenschaltung nacheinander aus einem "äußeren" Schalter (16), zwei "inneren" Schaltern (17, 18) und einem weiteren "äußeren" Schalter (19) aufgebaut ist, wobei zwischen den beiden "inneren" Schaltern (17, 18) ein Anschlusspunkt (12) vorhanden ist, und wobei die vier Schalter (16, 17, 18, 19) derart ansteuerbar sind, dass an dem Anschlusspunkt (12) eine Wechselspannung (UW) anliegt, **dadurch gekennzeichnet, dass** die Gate-Emitter-Spannung (Uge16, Uge19) der "äußeren" Schalter (16, 19) kleiner ist als die Gate-Emitter-Spannung (Uge17, Uge18) der jeweils benachbarten "inneren" Schalter (17, 18).

2. Wechselrichter (10) nach Anspruch 1, wobei DC/DC-Wandler zur Erzeugung und Veränderung der Gate-Emitter-Spannungen (Uge16, Uge17, Uge18, Uge19) vorgesehen sind.

3. Wechselrichter (10) nach Anspruch 1 oder 2, wobei jedem der Schalter (16, 17, 18, 19) eine Diode (21, 22, 23, 24) parallel geschaltet ist.

4. Wechselrichter (10) nach einem der Ansprüche 1 bis 3, wobei den beiden "inneren" Schaltern (17, 18) eine Serienschaltung aus zwei Dioden (26, 27) parallel geschaltet ist.

5. Wechselrichter (10) nach einem der Ansprüche 1 bis 4, wobei den vier Schaltern (16, 17, 18, 19) zwei Kondensatoren (13, 14 ) parallel geschaltet sind.

6. Wechselrichter (10) nach Anspruch 4 und 5, wobei die Verbindungspunkte der beiden Dioden (26, 27) und der beiden Kondensatoren (13, 14) miteinander verbunden sind.

7. Wechselrichter (10) nach Anspruch 6, wobei die genannten Verbindungspunkte mit einem Nullpotential verbunden sind.

8. Verfahren zum Betreiben eines elektrischen Wechselrichters (10), wobei der Wechselrichter (10) eine Reihenschaltung aus vier Schaltern (16, 17, 18, 19), insbesondere aus vier IGBTs (IGBT = insulated gate bipolar transistor) aufweist, wobei an die Reihenschaltung eine Gleichspannung (UG) angelegt ist, wobei die Reihenschaltung nacheinander aus einem "äußeren" Schalter (16), zwei "inneren" Schaltern (17, 18) und einem weiteren "äußeren" Schalter (19) aufgebaut ist, wobei zwischen den beiden "inneren" Schaltern (17, 18) ein Anschlusspunkt (12) vorhanden ist, und wobei bei dem Verfahren die vier Schalter (16, 17, 18, 19) derart angesteuert werden, dass an dem Anschlusspunkt (12) eine Wechselspannung (UW) anliegt, **dadurch gekennzeichnet, dass** bei dem Verfahren die Gate-Emitter-Spannung (Uge16, Uge19) der "äußeren" Schalter (16, 19) kleiner gewählt wird als die Gate-Emitter-Spannung (Uge17, Uge18) der jeweils benachbarten "inneren" Schalter (17, 18).

9. Verfahren nach Anspruch 8, wobei die Gate-Emitter-Spannungen (Uge16, Uge17, Uge18, Uge19) mit Hilfe von DC/DC-Wandler erzeugt werden.
